# FASCICULE DE BREVET EUROPEEN

(11) **EP 2 465 750 B1**
(45) Date de publication et mention de la délivrance du brevet: **01.04.2015**
(21) Numéro de dépôt: 11193337.0
(22) Date de dépôt: 13.12.2011
(51) Int. Cl.: B62B 9/10, B62B 7/08, B62B 9/12, B62B 9/24

(54) **Repose-pieds compact pour poussette ou hamac de poussette**
Kompakte Fußstütze für Kinderwagen oder für den Sitzteil eines Kinderwagens
Compact footrest for stroller or stroller body

(30) Priorité: 15.12.2010 FR 1060551; 07.03.2011 FR 1151826
(43) Date de publication de la demande: 20.06.2012
(73) Titulaire: Dorel France SA, 49309 Cholet Cedex (FR)
(72) Inventeur: Leroi, David, 85500 Beaurepaire (FR); Zweideck, Bruno, 49300 Cholet (FR)
(74) Mandataire: Bioret, Ludovic

(56) Documents cités:
- EP-A1- 1 228 938
- EP-A2- 0 494 736
- EP-A2- 1 086 876
- US-A- 4 272 100
- US-A- 5 562 330

## Description

### 1. Domaine de l'invention

Le domaine de l'invention est celui de la puériculture, et plus particulièrement, des poussettes, ou voiture d'enfants.

### 2. Art antérieur

De telles poussettes comprennent généralement un châssis, sur lequel est monté, de façon fixe ou amovible, un hamac, ou, le cas échéant, un autre dispositif de transport d'enfants (nacelle, coque, ...).

Ces châssis sont généralement pliables, et peuvent donc prendre une position dépliée, dans laquelle la poussette peut recevoir un enfant, et au moins une position pliée pour permettre un rangement de la poussette avec un encombrement réduit.

Il existe de nombreux modes de pliage. On connaît notamment les poussettes à pliage à plat, ou en deux dimensions, et les poussettes à pliage en fagots, ou en trois dimensions.

Cette dernière approche présente l'avantage d'un encombrement réduit, en position pliée. Pour cela, le pliage comprend des moyens (par exemple, des croisillons), permettant de rapprocher les deux côtés, ou partie latérale, du châssis l'une de l'autre. Inversement, le dépliage suppose d'éloigner ces deux parties latérales, pour permettre l'installation ou le déploiement du hamac. En effet, selon les cas, le hamac doit être ôté avant le pliage, s'il est rigide, ou être pliable en même temps que le châssis, s'il est prévu qu'il reste, ou qu'il puisse rester, sur le châssis.

L'invention s'applique plus particulièrement à de telles poussettes pliables en trois dimensions, et concerne en particulier le repose-pieds.

En effet, pour le confort de l'enfant, un repose-pieds est généralement prévu, pour que l'enfant puisse y poser les pieds. Selon les cas, ce repose-pieds est solidaire du châssis, et s'étend transversalement entre deux montants des côtés latéraux de ce châssis, ou solidaire du hamac. Dans les deux cas, cette traverse doit être pliable, ou, plus précisément, suivre le mouvement de rapprochement ou d'éloignement des deux côtés latéraux du châssis, lors du pliage et du dépliage. Il ne peut donc pas s'agir d'une simple traverse rigide et reliée fixement au châssis.

Une méthode simple, proposée sur de nombreuses poussettes, consiste à utiliser, en tant que repose-pieds, une bande souple, en tissu ou en une matière plastique souple adaptée. Cette approche présente l'avantage de ne pas s'opposer au pliage. En revanche, elle présente plusieurs inconvénients.

Tout d'abord, elle ne permet pas d'obtenir un repose-pieds rigide, et se déforme lorsque l'enfant appuie plus ou moins fortement.

De plus, l'aspect esthétique d'un tel repose-pieds est souvent non adapté au reste du design de la poussette, d'autant plus que, même en position dépliée, la bande souple a tendance à faire un pli, ou un creux, en son milieu (du fait qu'elle conserve en partie la forme imposée lors du pliage, au lieu de s'étendre selon un plan horizontal).

Plusieurs solutions ont été proposées pour réaliser des repose-pieds rigides.

Notamment, le document de brevet EP 1 693 276 décrit un repose-pieds constitué de deux éléments articulés, formant compas. Dans la position pliée, les deux branches du compas se rapprochent l'une de l'autre. Selon cette approche, on obtient un repose-pieds plus rigide.

Ce document décrit une poussette ou un hamac de poussette selon le préamble de la revendication 1.

Cependant, un inconvénient de cette approche est qu'un enfant présent dans la poussette peut, en donnant des coups de pieds ou en bougeant les jambes, déplacer les deux branches du compas formant le repose-pieds, celles-ci tendant alors à se rapprocher l'une de l'autre, ou à se refermer. Non seulement ceci peut détériorer ou bloquer le mécanisme de pliage et de dépliage de la poussette, mais encore ceci risque de blesser l'enfant, par pincement de la jambe, notamment lorsque le repose-pieds revient dans sa position dépliée.

### 3. Objectifs de l'invention

L'invention à pour objectif de pallier au moins certains de ces inconvénients.

Plus précisément, un objectif de l'invention est de fournir une poussette, ou un hamac, pliable en trois dimensions, et équipé(e) d'un repose-pieds qui soit rigide, lorsque la poussette ou le hamac est en position dépliée.

Notamment, un objectif de l'invention est de fournir une telle poussette, ou un tel hamac, dont le repose-pieds ne risque pas de se replier partiellement, de façon intempestive, lorsque le châssis est déplié.

L'invention a également pour objectif de fournir une telle poussette, ou un tel hamac, qui ne nécessite pas de manipulation supplémentaire, due au repose-pieds, pour plier ou déplier la poussette ou le hamac.

### 4. Résumé de l'invention

Ces objectifs, ainsi que d'autres qui apparaîtront plus clairement par la suite, sont atteints à l'aide d'une poussette ou hamac de poussette présentant une structure comprenant deux côtés latéraux, ladite structure étant pliable entre une position dépliée, dans laquelle les deux côtés latéraux de ladite structure sont éloignés l'un de l'autre, de façon à permettre l'installation d'un enfant, et une position pliée, dans laquelle les deux côtés latéraux de ladite structure sont rapprochés l'un de l'autre, ladite structure comprenant en outre au moins une traverse qui relie les deux côtés latéraux de ladite structure, ladite traverse étant pliable entre une position déployée lorsque la structure est dépliée et une position repliée lorsque la structure est pliée.

Selon l'invention, ladite traverse comprend des moyens de verrouillage, le dépliage de ladite structure assurant le verrouillage des moyens de verrouillage de ladite traverse, par éloignement desdits côtés latéraux et le pliage de ladite structure assurant le déverrouillage des moyens de verrouillage de ladite traverse, par rapprochement desdits côtés latéraux.

Par « dépliage », on entend ici l'action d'éloigner les deux côtés latéraux l'un de l'autre pour prendre la position dépliée. Par « pliage », on entend l'action inverse, visant à rapprocher les deux côtés latéraux l'un de l'autre. Ceci correspond donc à des déplacements selon une direction sensiblement parallèle à l'axe défini par la traverse, lorsqu'elle est dans sa position déployée.

L'invention propose donc une nouvelle approche de la réalisation et de la mise en oeuvre d'au moins une traverse pliable d'une poussette ou d'un hamac de poussette.

Une poussette ou un hamac de poussette selon l'invention présente, dans les deux cas, un châssis, comprenant deux côtés latéraux, pouvant être rapprochés l'un de l'autre. Ces deux côtés latéraux ont en commun au moins une traverse, par exemple un repose-pieds, situé à l'avant de la poussette ou du hamac. Un tel repose-pieds peut adopter une position sensiblement rectiligne quand la poussette est dépliée, et une position cassée ou non rectiligne quand la poussette est pliée.

Des moyens de verrouillage de la traverse sont prévus pour éviter le pliage (ou un début de pliage, ou une déformation) intempestif de la traverse et son maintien en position sensiblement rectiligne lorsque la poussette est dépliée. Ainsi, notamment, le verrouillage d'un repose-pieds est tel qu'un enfant tapant dans le repose-pieds ne peut pas entraîner le déverrouillage et le début du pliage du repose-pieds.

Ils sont conçus pour que le verrouillage du repose-pieds, et plus généralement de la ou des traverses, soit automatique, en fin de dépliage de la poussette, c'est-à-dire qu'il ne nécessite aucune action supplémentaire de l'utilisateur, autre que l'action d'éloigner les deux côtés latéraux. Ils sont en outre conçus pour que le déverrouillage du repose-pieds soit automatique, en début de pliage de la poussette, sans nécessiter d'action supplémentaire de l'utilisateur, autre que l'action de rapprocher les deux côtés latéraux.

En d'autres termes, le dépliage du châssis par éloignement ou écartement des deux côtés latéraux du châssis assure le verrouillage des moyens de verrouillage du repose-pieds.

Inversement, le rapprochement des deux côtés latéraux du châssis assure le déverrouillage automatique (c'est-à-dire sans action spécifique supplémentaire autre que celle du pliage) des moyens de verrouillage du repose-pieds et le pliage du châssis.

On comprend que, selon les modes de réalisation, cette ou ces traverses (un repose-pieds par exemple) peuvent être mises en oeuvre directement sur une poussette, plus précisément sur son châssis, ou sur un hamac (qui peut être désolidarisable du châssis, par exemple pour être remplacé par un autre équipement).

Dans un mode de réalisation particulier de l'invention, la traverse est formée de trois éléments articulés entre eux deux à deux :
- deux éléments d'extrémité, montés articulés chacun sur un côté latéral de ladite structure, par rapport à deux premiers axes de rotation ;
- un élément central, relié au deux éléments d'extrémité par l'intermédiaire de deux seconds axes de rotation.

La constitution en trois éléments de la ou des traverses, par exemple un repose-pieds, permet d'obtenir une bonne rigidité, lorsque le châssis est déplié, et un encombrement réduit, lorsque le châssis est plié.

Préférentiellement, lesdits seconds axes ne sont pas alignés avec lesdits premiers axes.

En d'autres termes, les seconds axes sont décalés vers l'arrière ou vers l'avant de ladite structure, par rapport aux premiers axes.

Préférentiellement, la droite passant par les seconds axes est parallèle à celle passant par les premiers axes, et donc parallèles à l'axe défini par la traverse, lorsqu'elle est dans sa position déployée.

Dans un autre mode de réalisation particulier de l'invention, ledit élément central est relié à chaque élément d'extrémité par une liaison comprenant lesdits moyens de verrouillage, lesdits moyens de verrouillage mettant en oeuvre une partie mâle oblongue mobile dans une lumière ou un trou borgne présentant une portion allongée, dans laquelle la partie mâle oblongue peut seulement coulisser et une portion circulaire, par rapport à laquelle la partie mâle peut effectuer une rotation.

De façon avantageuse, ladite partie mâle oblongue est portée par ledit élément central, et est fixe par rapport à celui-ci.

Préférentiellement, ladite lumière ou ledit trou borgne est porté par un élément d'extrémité, ladite partie mâle se trouvant dans la portion allongée lorsque ladite structure est dans la position dépliée et dans la portion circulaire lorsque ladite structure est dans la position pliée.

Selon un aspect avantageux de l'invention, lors du passage de la position dépliée à la position pliée, et inversement, ladite lumière effectue une rotation de l'ordre de 90° autour de ladite partie mâle oblongue.

Dans certains modes de réalisation, cependant, la plage de rotation peut être plus faible, de façon que la traverse en position dépliée ne soit pas rectiligne, mais incurvée. Ceci peut notamment être le cas pour un arceau de maintien.

Dans un mode de réalisation particulier de l'invention, lesdits éléments articulés sont montés de façon que, lorsque ladite structure passe de la position dépliée à la position pliée, lesdits éléments d'extrémité se déplacent vers l'arrière ou l'avant de la poussette ou du hamac.

Avantageusement, lesdits éléments articulés sont montés de façon que, lors du pliage ou du dépliage de la poussette ou du hamac, ledit élément central est maintenu sensiblement perpendiculaire aux plans définis par lesdits côtés latéraux de la structure.

Dans un mode de réalisation préférentiel de l'invention, ledit élément central chevauche partiellement au-dessus desdits éléments d'extrémité, lorsque ladite structure est dans la position dépliée.

L'élément central peut ainsi s'étendre au-dessus ou en dessous des éléments d'extrémité lorsque la structure est dans la position dépliée permet tant ainsi d'obtenir une bonne rigidité du repose-pieds.

De façon avantageuse, ladite traverse appartient au groupe comprenant :
- un repose-pieds ;
- un support de panier ;
- un arceau de maintien ;
- un marchepied arrière.

### 5. Liste des figures

D'autres caractéristiques et avantages de l'invention apparaîtront à la lecture de la description suivante d'un mode de réalisation de l'invention, donnée à titre de simple exemple illustratif et non limitatif, et des dessins annexés parmi lesquels :
- la figure 1 est une vue en perspective d'un hamac comprenant un repose-pieds selon un mode de réalisation de l'invention ;
- les figures 2A à 2D sont différentes vues du repose-pieds de la figure 1 en position dépliée ;
- les figures 3A à 3D sont différentes vues du repose-pieds de la figure 1 en position pliée ;
- la figure 4 est une vue de détail, en coupe, de la liaison entre l'élément central et un élément d'extrémité du repose-pieds ;
- la figure 5 est une vue en perspective d'une poussette comprenant une poutre avant et un arceau de maintien, selon un autre mode de réalisation de l'invention.

### 6. Description d'un mode de réalisation de l'invention

L'invention concerne donc une amélioration des poussettes ou des hamacs de poussettes pliables en trois dimensions et, notamment des traverses (repose-pieds, marchepieds, support de panier, ...) reliant les deux côtés latéraux de la structure de telles poussettes ou hamacs.

Le principe général de l'invention repose sur l'utilisation d'un repose-pieds articulé formé, par exemple, en trois parties. Cette approche présente l'avantage d'offrir une bonne compacité, en position pliée, et un aspect visuel avantageux, par rapport à une bande souple qui présente généralement un pli ou une déformation en position dépliée.

Un mode de réalisation particulier est décrit ci-après. Dans cet exemple, le repose-pieds de l'invention est mis en oeuvre sur un hamac d'une poussette (qui peut être désolidarisable du châssis ou de la structure de la poussette, par exemple pour être remplacé par un autre équipement). Bien évidemment, un tel repose-pieds peut être mis en oeuvre directement sur une poussette, plus précisément sur son châssis.

Selon ce mode de réalisation, le repose-pieds est verrouillé dans sa position dépliée entre les deux côtés latéraux de la structure du hamac, lorsque celui-ci est en position déployée. Ainsi, l'enfant ne peut pas, par exemple par des mouvements des jambes, entraîner un repli partiel du repose-pieds, qui risquerait de pincer et blesser l'enfant. Seul un rapprochement des deux côtés latéraux du châssis autorise le pliage (et donc le déverrouillage, sans commande ni action supplémentaire) du repose-pieds.

En d'autres termes, un enfant installé dans la poussette et butant dans le repose-pieds ne peut pas fermer ce dernier, puisque le sens de déverrouillage du repose-pieds, correspondant au mouvement des côtés latéraux de la poussette ou du hamac se pliant, est perpendiculaire à celui des pieds d'un enfant tapant dans le repose-pieds.

Il n'est pas non plus possible de déployer le repose-pieds lorsque celui-ci est en position repliée (et provoquer son verrouillage en position déployée) en frappant dans ce dernier selon une direction perpendiculaire à son axe longitudinal.

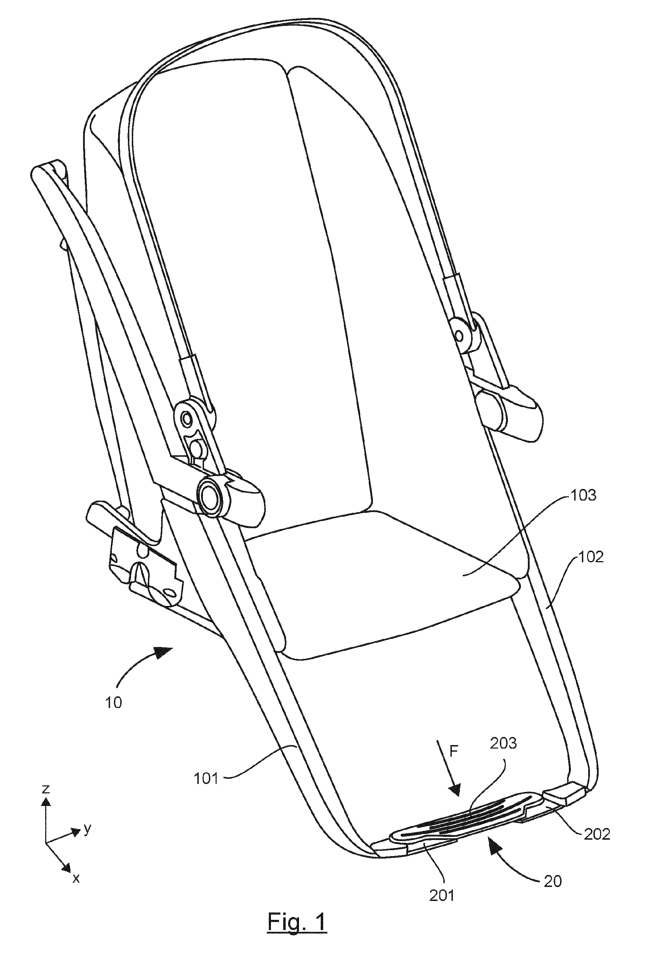

Sur la figure 1, on présente uniquement un hamac 10 d'une poussette, sans illustrer la poussette, par souci de clarté. Le hamac 10 présente une assise 103 et une structure, comprenant deux côtés ou montants latéraux 101, 102, pouvant être rapprochés l'un de l'autre.

Un repose-pieds 20 est monté articulé sur ces montants latéraux 101, 102 et est formé de trois éléments articulés entre eux deux à deux, à savoir deux éléments d'extrémité 201, 202, et une portion principale centrale ou élément central 203.

Ces éléments 201 à 203 sont de préférence fabriqués en plastique.

Le hamac 10 est pliable en trois dimensions et comprend des moyens permettant de rapprocher les deux montants latéraux 101, 102, du châssis l'un de l'autre selon une direction sensiblement parallèle à l'axe Y défini par le repose-pieds 20, ou au moins son élément central, lorsqu'il est dans sa position déployée (de la figure 1). Les deux montants latéraux 101, 102 s'étendent selon l'axe X.

La cinématique de pliage et de dépliage du repose-pieds est décrite ci-après.

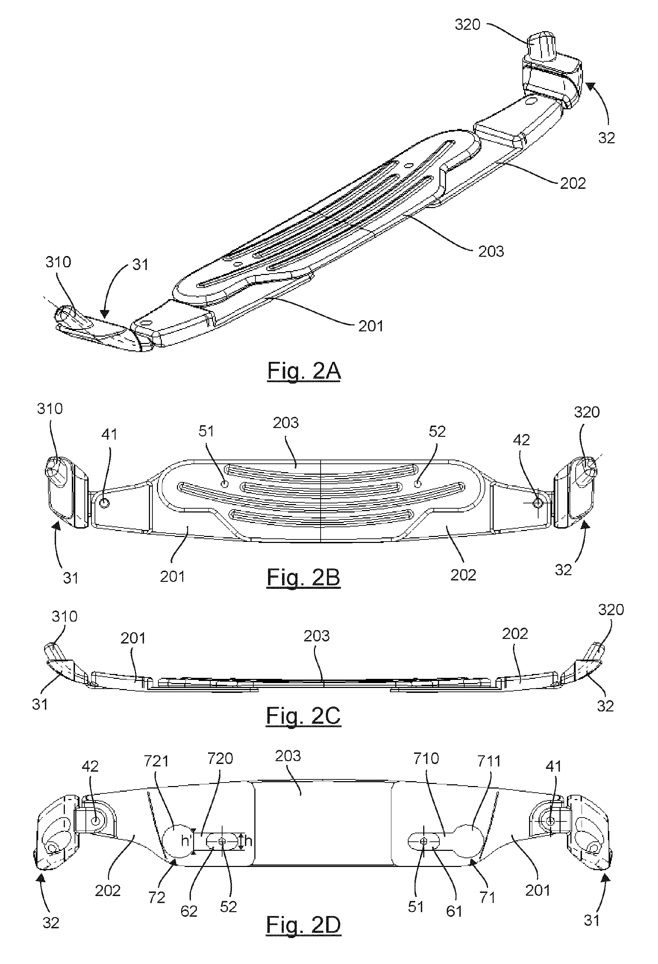

Les figures 2A à 2D présentent le repose-pieds 20 en position dépliée.

On distingue sur ces figures 2A à 2D les éléments d'extrémités 201, 202, qui sont montés articulés (en liaison pivot) chacun sur un montant latéral 101, 102 respectivement, du hamac 10.

Plus précisément, les éléments d'extrémités 201, 202, sont montés pivotant sur des éléments de liaison 31, 32, respectivement, par rapport à deux premiers axes de rotation 41, 42 respectivement.

Chaque élément de liaison 31, 32, comprend un tenon 310, 320 de section oblongue qui est logé et fixé (par vissage, par exemple) dans un logement complémentaire prévu à l'extrémité inférieure de chaque montant latéral 101, 102.

L'élément central 203 est relié au deux éléments d'extrémité 201, 202, par l'intermédiaire de deux seconds axes d'articulation 51, 52. Plus précisément, l'élément central 203 est relié à chaque élément d'extrémité 201, 202, par une liaison mettant en oeuvre une partie mâle oblongue 61, 62 mobile dans une lumière ou un trou borgne 71, 72 (dont la forme s'apparente à une clé) présentant une portion allongée 710, 720, dans laquelle la partie mâle oblongue 61, 62 peut seulement coulisser et une portion circulaire, 711, 721, par rapport à laquelle la partie mâle 61, 62 peut effectuer une rotation.

La partie mâle oblongue 61, 62 est portée par ledit élément central 203, et est fixe par rapport à celui-ci. La lumière ou le trou borgne 71, 72 est porté par un élément d'extrémité 201, 202. Il est possible d'inverser cette distribution.

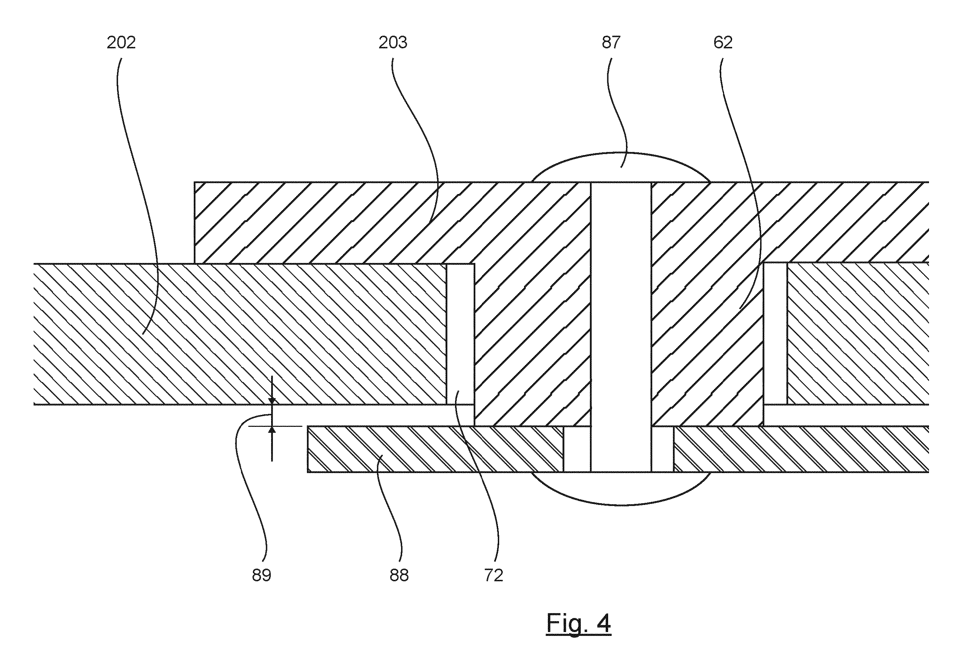

Sur la vue de détail en coupe de la figure 4, on distingue la liaison entre l'élément central 203 qui porte la partie mâle 62 et l'élément d'extrémité 202, la partie mâle 62 étant logée dans le trou 72 ménagé dans l'élément d'extrémité 202 et retenue dans ce trou 72 par le biais d'un rivet ou d'un boulon 87 traversant l'élément central 203 et coopérant avec une rondelle acier 88. Un jeu 89 est prévu entre la surface supérieure de la rondelle acier 88 et la surface inférieure de l'élément d'extrémité 202.

On note que les dimensions de la partie mâle oblongue 61, 62 et de la portion allongée 710, 720 sont choisies de façon à prévoir un jeu qui permet à la partie mâle de coulisser dans la portion allongée et un verrouillage efficace du marchepieds en position dépliée. En outre, les dimensions de la partie mâle oblongue 61, 62 et de la portion circulaire 711, 721 de la lumière ou du trou borgne 71, 72 sont choisies de façon à prévoir un jeu qui permet la rotation de la partie mâle oblongue 61, 62 dans la lumière 71, 72.

Dans la position ouverte ou dépliée, les éléments 201 à 203 forment un repose-pieds 20 s'étendant de façon rectiligne entre les montants latéraux 101, 102. L'élément central 203 chevauche partiellement les éléments d'extrémité 201, 202 (dans cet exemple, il s'étend partiellement au-dessus des éléments d'extrémité 201, 202. Dans une variante, il peut s'étendre en dessous des ces éléments), lorsque le hamac est dans la position dépliée, permettant ainsi d'obtenir une bonne rigidité du repose-pieds 20.

Du fait que les deux montants latéraux 101, 102 du hamac 10 sont solidarisés aux éléments d'extrémité 201, 202, du repose-pieds 20, le pliage/dépliage du hamac 10, et donc le rapprochement/écartement des montants latéraux 101, 102, contrôle le mouvement d'ouverture/fermeture du repose-pieds 20.

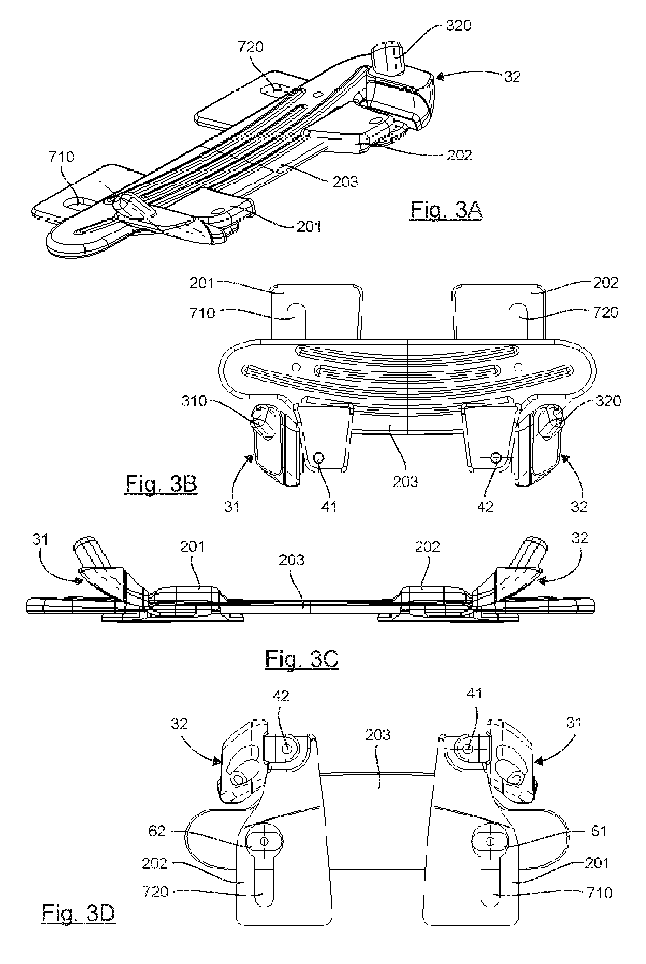

Les figures 3A à 3D présentent le repose-pieds en position pliée.

On note que la partie mâle 61, 62 se trouve dans la portion allongée 710, 720 de la lumière ou du trou borgne 71, 72 lorsque le hamac est dans la position dépliée (figures 2A à 2D). Le verrouillage en position dépliée du repose-pieds est assuré par ces parties mâle 61, 62 qui sont bloqués dans la portion allongée 710, 720 des lumières 71, 72. Un enfant présent dans la poussette ne peut donc pas, en donnant des coups de pieds ou en bougeant les jambes, déplacer les trois éléments formant le repose-pieds et provoquer le déverrouillage du repose-pieds. La flèche F, représentée sur la figure 1 indique une direction du mouvement des pieds ou des jambes d'un enfant, qui est sensiblement parallèle à l'axe x, et perpendiculaire à la direction de verrouillage-déverrouillage du repose-pieds.

Le pliage du hamac 10, et donc le rapprochement des montants latéraux 101, 102, selon l'axe Y provoque tout d'abord le rapprochement des éléments d'extrémité 201, 202, et donc des lumières 71, 72 portées par les éléments d'extrémité 201, 202, jusqu'à ce que la partie mâle 61, 62 se trouve dans la portion circulaire 711, 721 de la lumière 71, 72.

Le rapprochement des montants latéraux 101, 102, provoque ensuite une rotation des éléments d'extrémité 201, 202, et donc des lumières 71, 72 de l'ordre de 90° autour de la partie mâle oblongue 61, 62, et donc une rotation de l'ordre de 90° des éléments d'extrémité 201, 202 vers l'arrière (selon l'axe X) du hamac 10 dans ce mode de réalisation (ou vers l'avant suivant le décalage des axes).

Ainsi, lors du pliage du hamac 10, les trois éléments 201 à 203 du repose-pieds se décalent vers l'arrière selon l'axe X du hamac (ou vers l'avant selon l'axe X dans une variante), tout en restant perpendiculaires à l'axe principale de celui-ci. L'élément central 203 est maintenu sensiblement perpendiculaire aux plans définis par les côtés du hamac 10 et les éléments d'extrémité 201, 202 sont déplacés dans un plan sensiblement parallèle aux plans définis par les côtés du hamac 10.

L'encombrement du repose-pieds en position pliée du hamac est donc réduit.

Ceci est obtenu à l'aide d'axes 51, 52 décalés, par rapport à des axes de rotation 41, 42 des éléments d'extrémité 201, 202, et à des lumières 71, 72 de formes adaptées. En effet, dans l'exemple illustré, les seconds axes 51, 52 sont décalés vers l'arrière du hamac 10, par rapport aux premiers axes 41, 42. Dans une variante, les seconds axes 51, 52 sont décalés vers l'avant du hamac 10, par rapport aux premiers axes 41, 42.

On note que la partie mâle 61, 62 se trouve dans la portion circulaire 711, 721 lorsque le hamac est dans la position pliée (figures 3A à 3D).

On comprend aisément que, lors du dépliage, l'écartement des montants latéraux du châssis du hamac provoque tout d'abord une rotation des éléments d'extrémité 201, 202 et donc des portions circulaires 711, 721 des lumières 71, 72 de l'ordre de 90° autour de la partie mâle oblongue 61, 62, et donc une rotation de l'ordre de 90° des éléments d'extrémité 201, 202 vers l'avant du hamac 10 (ou vers l'arrière, suivant le décalage des axes), puis le déplacement en coulissement de la partie mâle oblongue 61, 62 dans la portion allongée 710, 720 de la lumière 71, 72 jusqu'à ce que les trois éléments du repose-pieds soient sensiblement alignés.

La solution de l'invention est avantageuse en ce sens qu'elle ne nécessite pas la mise en oeuvre de moyens de verrouillage/déverrouillage spécifiques du repose-pieds (comme une commande par câble, par exemple) pour plier et déplier ce dernier.

En résumé, le repose-pieds articulé en trois parties selon ce mode de réalisation présente notamment les avantages suivants :
- pas de génération d'effort supplémentaire au pliage ou au dépliage (grâce aux axes de rotation) ;
- le repose-pieds est toujours plan grâce à la rigidité du plastique ;
- le repose pied ne se referme pas sous l'effet du contact des pieds en avant et en arrière. En effet les deux axes de rotation 51, 52 sont verrouillés automatiquement lorsque le châssis est déplié ;
- le repose-pieds se déverrouille automatiquement (c'est-à-dire sans action spécifique supplémentaire autre que celle du pliage) au moment du pliage lorsque les deux montants du hamac se rapprochent. Ceci est dû à la forme des lumières des axes de rotation 51, 52 ainsi qu'au décalage des axes de rotation 51, 52 et 41, 42 qui permettent le déverrouillage sans effort.

Le principe de l'invention peut s'appliquer à d'autres traverses de la poussette telles que le support de panier, l'arceau de maintien, le marchepied arrière (pour un second enfant),... Ces traverses sont constituées de trois éléments articulés.

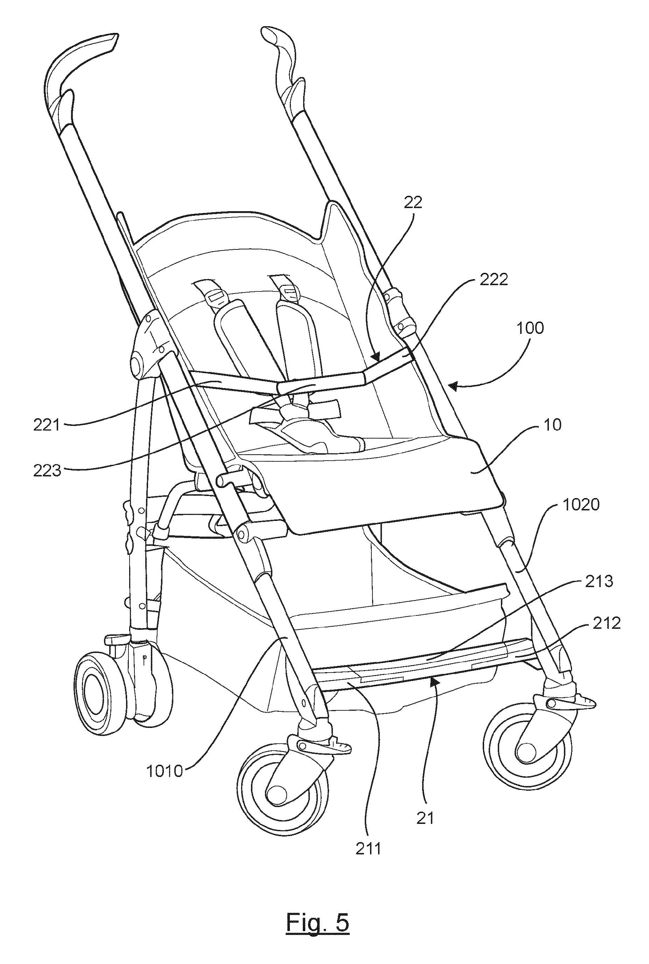

A titre d'exemple, la figure 5 présente en perspective une poussette 100 pliable en trois dimensions dans laquelle est monté un hamac 10 (ne comprenant pas, dans ce mode de réalisation, de repose-pieds). Le châssis de la poussette 100 comprend une poutre avant 21, formant repose-pieds, qui relie les deux côtés latéraux 1010, 1020 de la poussette 100 et est constituée de trois éléments articulés 211 à 213. Dans la position ouverte ou dépliée de la poussette 100 illustrée sur cette figure 5, les éléments 211 à 213 formant la poutre 21 s'étendent horizontalement (et de façon sensiblement rectiligne) entre les montants latéraux 1010, 1020.

Dans ce mode de réalisation, la poussette 100 comprend en outre un arceau de maintien 22 qui relie les deux côtés latéraux 1010, 1020 de la poussette 100. Cet arceau de maintien 22 est constitué de trois éléments articulés 221 à 223 qui s'étendent de façon courbe (c'est-à-dire de façon non rectiligne) entre les montants latéraux 1010, 1020.

Dans ce cas, les lumières ou trous borgnes (dont la forme s'apparente à une clé) décrits précédemment sont configurés de façon que, dans la position verrouillée de l'arceau de maintien 22, celui-ci définit la courbe (plus exactement l'arc brisé, formé de trois segments) souhaitée. Pour cela, les portions allongées des lumières sont telles qu'elles s'étendent selon l'angle souhaité (par exemple entre 20 et 60°) avec l'axe de l'élément central 223, dans la position dépliée.

## Revendications

1. Poussette ou hamac de poussette (10) présentant une structure comprenant deux côtés latéraux (101, 102), ladite structure étant pliable entre une position dépliée, dans laquelle les deux côtés latéraux (101, 102) de ladite structure sont éloignés l'un de l'autre, de façon à permettre l'installation d'un enfant, et une position pliée, dans laquelle les deux côtés latéraux (101, 102) de ladite structure sont rapprochés l'un de l'autre,
ladite structure comprenant en outre au moins une traverse (20) qui relie les deux côtés latéraux (101, 102) de ladite structure, ladite traverse (20) étant pliable entre une position déployée lorsque la structure est dépliée et une position repliée lorsque la structure est pliée,
caractérisé(e) en ce que ladite traverse (20) comprend des moyens de verrouillage, le dépliage de ladite structure assurant le verrouillage des moyens de verrouillage de ladite traverse (20), par éloignement desdits côtés latéraux (101, 102) et le pliage de ladite structure assurant le déverrouillage des moyens de verrouillage de ladite traverse (20), par rapprochement desdits côtés latéraux (101, 102).

2. Poussette ou hamac (10) selon la revendication 1, caractérisé(e) en ce que ladite traverse (20) est formée de trois éléments (201, 202, 203) articulés entre eux deux à deux :
- deux éléments d'extrémité (201, 202), montés articulés chacun sur un côté latéral (101, 102) de ladite structure, par rapport à deux premiers axes de rotation (41, 42) ;
- un élément central (203), relié au deux éléments d'extrémité (201, 202) par l'intermédiaire de deux seconds axes de rotation (51, 52).

3. Poussette ou hamac (10) selon la revendication 2, caractérisé(e) en ce que lesdits seconds axes (51, 52) ne sont pas alignés avec lesdits premiers axes (41, 42).

4. Poussette ou hamac (10) selon la revendication 2 ou 3, caractérisé(e) en ce que ledit élément central (203) est relié à chaque élément d'extrémité (201, 202) par une liaison comprenant lesdits moyens de verrouillage, lesdits moyens de verrouillage mettant en oeuvre une partie mâle oblongue (61, 62) mobile dans une lumière ou un trou borgne (71, 72) présentant une portion allongée (710, 720), dans laquelle la partie mâle oblongue (61, 62) peut seulement coulisser et une portion circulaire (711, 721), par rapport à laquelle la partie mâle (61, 62) peut effectuer une rotation.

5. Poussette ou hamac (10) selon la revendication 4, caractérisé(e) en ce que ladite partie mâle oblongue (61, 62) est portée par ledit élément central (203), et est fixe par rapport à celui-ci.

6. Poussette ou hamac (10) selon la revendication 5, caractérisé(e) en ce que ladite lumière ou ledit trou borgne (71, 72) est porté par un élément d'extrémité (201, 202), ladite partie mâle (61, 62) se trouvant dans la portion allongée (710, 720) lorsque ladite structure est dans la position dépliée et dans la portion circulaire (711, 721) lorsque ladite structure est dans la position pliée.

7. Poussette ou hamac (10) selon la revendication 6, caractérisé(e) en ce que, lors du passage de la position dépliée à la position pliée, et inversement, ladite lumière (71, 72) effectue une rotation de l'ordre de 90° autour de ladite partie mâle oblongue (61, 62).

8. Poussette ou hamac (10) selon l'une quelconque des revendications 2 à 7, caractérisé(e) en ce que lesdits éléments articulés (201, 202, 203) sont montés de façon que, lorsque ladite structure passe de la position dépliée à la position pliée, lesdits éléments d'extrémité (201, 202) se déplacent vers l'arrière ou l'avant de la poussette ou du hamac (10).

9. Poussette ou hamac (10) selon l'une quelconque des revendications 2 à 8, caractérisé(e) en ce que lesdits éléments articulés (201, 202, 203) sont montés de façon que, lors du pliage et du dépliage de la poussette ou du hamac (10), ledit élément central (203) est maintenu sensiblement perpendiculaire aux plans définis par lesdits côtés latéraux (101, 102) de la structure.

10. Poussette ou hamac (10) selon l'une quelconque des revendications 2 à 9, caractérisé(e) en ce que ledit élément central (203) chevauche partiellement lesdits éléments d'extrémité (201, 202), lorsque ladite structure est dans la position dépliée.

11. Poussette ou hamac (10) selon l'une quelconque des revendications 1 à 10, caractérisé(e) en ce que ladite traverse appartient au groupe comprenant :
- un repose-pieds ;
- un support de panier ;
- un arceau de maintien ;
- un marchepied arrière.

## Patentansprüche

1. Kinderwagen oder Kinderwagenhängematte (10) mit einer Struktur, die zwei Seiten (101, 102) aufweist, wobei die besagte Struktur sich zwischen einer entfalteten Position, bei der die zwei Seiten (101, 102) der besagten Struktur voneinander entfernt sind, um das Hineinsetzen eines Kindes zu ermöglichen, und einer zusammengefalteten Position, bei der die zwei Seiten (101, 102) der besagten Struktur dicht beieinander liegen, einstellen lässt,
wobei die besagte Struktur darüber hinaus über ein querliegendes Teil (20) verfügt, das die zwei Seiten (101, 102) der besagten Struktur verbindet, wobei das besagte querliegende Teil (20) sich zwischen einer entfalteten Position, wenn die Struktur entfaltet ist und einer zusammengefalteten Position, wenn die Struktur zusammengefaltet ist, einstellen lässt,
**dadurch gekennzeichnet, dass** das besagte querliegende Teil (20) über Verriegelungsmittel verfügt, wobei das Entfalten der besagten Struktur das Verriegeln der Verriegelungsmittel des besagten querliegenden Teils (20) durch das voneinander Entfernen der besagten Seiten (101, 102) sicherstellt und wobei das Zusammenfalten der besagten Struktur das Entriegeln der Verriegelungsmittel des besagten querliegenden Teils (20) durch Aneinanderrücken der besagten Seiten (101, 102) sicherstellt.

2. Kinderwagen oder Kinderwagenhängematte (10) nach Anspruch 1, **dadurch gekennzeichnet, dass** das besagte querliegende Teil (20) durch drei Elemente (201, 202, 203) gebildet wird, wobei jeweils zwei dieser Elemente untereinander durch Gelenke verbunden sind:
- zwei Endelemente (201, 202), die jeweils über Gelenke mit einer Seite (101, 102) der besagten Struktur mit Bezug auf zwei ersten Drehachsen (41, 42) verbunden sind;
- ein zentrales Element (203), das mit den zwei Endelementen (201, 202) über zwei zweite Drehachsen (51, 52) verbunden ist.

3. Kinderwagen oder Kinderwagenhängematte (10) nach Anspruch 2, **dadurch gekennzeichnet, dass** die besagten zweiten Achsen (51, 52) nicht zu den besagten ersten Achsen (41, 42) ausgerichtet sind.

4. Kinderwagen oder Kinderwagenhängematte (10) nach Anspruch 2 oder 3, **dadurch gekennzeichnet, dass** das besagte zentrale Element (203) mit jedem Endelement (201, 202) mittels einer Verbindung zusammengefügt ist, welche die besagten Verriegelungsmittel umfasst, wobei die besagten Verriegelungsmittel jeweils ein längliches, hervorstehendes Teil (61, 62) zum Einsatz bringen, das in einem Schlitz-oder Sackloch (71, 72) beweglich ist, wobei das Schlitz- oder Sackloch einen verlängerten Teil (710, 720), in dem das längliche, hervorstehende Teil (61, 62) nur gleiten kann sowie einen kreisrunden Teil (711, 721) aufweist, in dem sich das längliche, hervorstehende Teil (61, 62) drehen kann.

5. Kinderwagen oder Kinderwagenhängematte (10) nach Anspruch 4, **dadurch gekennzeichnet, dass** das besagte längliche, hervorstehende Teil (61, 62) vom besagten zentralen Element (203) getragen wird und im Verhältnis zu diesem fest sitzt.

6. Kinderwagen oder Kinderwagenhängematte (10) nach Anspruch 5, **dadurch gekennzeichnet, dass** das besagte Schlitz- oder Sackloch (71, 72) von einem Endelement (201, 202) getragen wird, wobei das besagte längliche, hervorstehende Teil (61, 62) sich in dem länglichen Teil (710, 720) befindet, wenn sich die besagte Struktur in der entfalteten Position befindet und in dem kreisrunden Teil (711, 721), wenn die besagte Struktur sich in der zusammengefalteten Position befindet.

7. Kinderwagen oder Kinderwagenhängematte (10) nach Anspruch 6, **dadurch gekennzeichnet, dass** beim Übergang von der entfalteten in die zusammengefaltete Position und umgekehrt, das besagte Schlitzloch (71, 72) eine Drehung um 90° um das besagte längliche, hervorstehende Teil (61, 62) vollzieht.

8. Kinderwagen oder Kinderwagenhängematte (10) nach einem der Ansprüche 2 bis 7, **dadurch gekennzeichnet, dass** die besagten, gelenkig angebrachten Elemente (201, 202, 203) so angebracht sind, dass wenn die besagte Struktur von der entfalteten in die zusammengefaltete Position übergeht, die besagten Endelemente (201, 202) sich jeweils zum vorderen bzw. zum hinteren Teil des Kinderwagens oder der Kinderwagenhängematte (10) hin bewegen.

9. Kinderwagen oder Kinderwagenhängematte (10) nach einem der Ansprüche 2 bis 8, **dadurch gekennzeichnet, dass** die besagten, gelenkig angebrachten Elemente (201, 202, 203) so angebracht sind, dass wenn der besagte Kinderwagen oder die besagte Kinderwagenhängematte (10) zusammengefaltet oder entfaltet wird, das besagte zentrale Element (203) in etwa senkrecht zu den von den besagten Seiten (101, 102) der Struktur gebildeten Ebenen gehalten wird.

10. Kinderwagen oder Kinderwagenhängematte (10) nach einem der Ansprüche 2 bis 9, **dadurch gekennzeichnet, dass** das besagte zentrale Element (203) teilweise auf dem besagten Endelementen (201, 202) aufliegt, wenn sich die besagte Struktur in der entfalteten Position befindet.

11. Kinderwagen oder Kinderwagenhängematte (10) nach einem der Ansprüche 1 bis 10, **dadurch gekennzeichnet, dass** das besagte querliegende Teil folgendes umfasst:
- eine Fußstütze,
- einen Korbträger,
- einen Haltebügel
- ein hinteres Trittbrett.

## Claims

1. Pushchair or pushchair body (10) with a structure comprising two lateral sides (101, 102), the said structure being foldable between an unfolded position in which the two lateral sides (101, 102) of the said structure are spaced from one another, such as to allow a child to be put into position, and a folded position in which the two lateral sides (101, 102) of the said structure are brought towards one another, the said structure additionally comprising at least one cross-member (20) which connects the two lateral sides (101, 102) of the said structure, the said cross-member (20) being foldable between a deployed position when the structure is unfolded, and a folded-back position when the structure is folded, **characterised in that** the said cross-member (20) comprises locking means, the unfolding of the said structure ensuring the locking of the means for locking the said cross-member (20) by spacing of the said lateral sides (101, 102), and the folding of the said structure ensuring the unlocking of the means for locking the said cross-member (20), by bringing the said lateral sides (101, 102) towards one another.

2. Pushchair or body (10) according to claim 1, **characterised in that** the said cross-member (20) is formed by three elements (201, 202, 203) which are articulated with one another in pairs, i.e.:
- two end elements (201, 202) which are fitted such as to be articulated, one on each lateral side (101, 102) of the said structure, relative to two first axes of rotation (41, 42);
- a central element (203) which is connected to the two end elements (201, 202) by means of two second axes of rotation (51, 52).

3. Pushchair or body (10) according to claim 2, **characterised in that** the said second axes (51, 52) are not aligned with the said first axes (41, 42).

4. Pushchair or body (10) according to claim 2 or 3, **characterised in that** the said central element (203) is connected to each end element (201, 202) by a connection comprising the said locking means, the said locking means implementing an oblong male part (61, 62) which is mobile in a slot or blind hole (71, 72) with an elongate portion (710, 720), in which the oblong male part (61, 62) can only slide, and a circular portion (711, 721), relative to which the male part (61, 62) can perform a rotation.

5. Pushchair or body (10) according to claim 4, **characterised in that** the said oblong male part (61, 62) is contained in the said central element (203), and is fixed relative to the latter.

6. Pushchair or body (10) according to claim 5, **characterised in that** the said slot or the said blind hole (71, 72) is contained in an end element (201, 202), the said male part (61, 62) being in the elongate portion (710, 720) when the said structure is in the unfolded position, and in the circular portion (711, 721) when the said structure is in the folded position.

7. Pushchair or body (10) according to claim 6, **characterised in that**, during the transition from the unfolded position to the folded position and conversely, the said slot (71, 72) performs a rotation of approximately 90° around the said oblong male part (61, 62).

8. Pushchair or body (10) according to any one of claims 2 to 7, **characterised in that** the said articulated elements (201, 202, 203) are fitted such that, when the said structure goes from the unfolded position to the folded position, the said end elements (201, 202) are displaced towards the rear or the front of the pushchair or body (10).

9. Pushchair or body (10) according to any one of claims 2 to 8, **characterised in that** the said articulated elements (201, 202, 203) are fitted such that, during the folding and unfolding of the pushchair or body (10), the said central element (203) is maintained substantially perpendicular to the planes defined by the said lateral sides (101, 102) of the structure.

10. Pushchair or body (10) according to any one of claims 2 to 9, **characterised in that** the said central element (203) partly straddles the said end elements (201, 202) when the said structure is in the unfolded position.

11. Pushchair or body (10) according to any one of claims 1 to 10, **characterised in that** the said cross-member belongs to the group comprising:
- a footrest;
- a body support;
- a retention arch;
- a rear footboard.
